Europäisches Patentamt

European Patent Office

Office européen des brevets

(19)

(11) **EP 1 221 133 B1**

(12) **FASCICULE DE BREVET EUROPEEN**

(45) Date de publication et mention
de la délivrance du brevet:
**16.06.2004 Bulletin 2004/25**

(21) Numéro de dépôt: **00968043.0**

(22) Date de dépôt: **13.10.2000**

(51) Int Cl.⁷: **G06K 11/08**, H04N 5/445

(86) Numéro de dépôt international:
**PCT/FR2000/002866**

(87) Numéro de publication internationale:
**WO 2001/029760 (26.04.2001 Gazette 2001/17)**

(54) **ENSEMBLE D'INTERFACE ENTRE UN UTILISATEUR ET UN DISPOSITIF ELECTRONIQUE**

SCHNITTSTELLEVORRICHTUNG ZWISCHEN EINEM BENUTZER UND EINER
ELEKTRONISCHEN VORRICHTUNG

INTERFACE UNIT BETWEEN A USER AND AN ELECTRONIC DEVICE

(84) Etats contractants désignés:
**AT BE CH CY DE DK ES FI FR GB GR IE IT LI LU
MC NL PT SE**

(30) Priorité: **15.10.1999 FR 9912891
09.11.1999 FR 9914061**

(43) Date de publication de la demande:
**10.07.2002 Bulletin 2002/28**

(73) Titulaire: **Reza, Jean-Paul Guy
75007 Paris (FR)**

(72) Inventeur: **Reza, Jean-Paul Guy
75007 Paris (FR)**

(74) Mandataire: **Garel, Régis
Cabinet Plasseraud
65/67 rue de la Victoire
75440 Paris Cedex 09 (FR)**

(56) Documents cités:
**US-A- 3 680 078        US-A- 4 591 841
US-A- 5 394 168        US-A- 5 420 607**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention est relative à un ensemble d'interface entre un utilisateur et un dispositif électronique comportant une logique de commande et un écran cathodique rectangulaire à balayage.

Un tel écran cathodique est balayé par un spot lumineux qui occupe successivement tous les points de l'écran selon un cycle de balayage prédétermine.

US-A-5 394168, qui est considéré comme étant l'état de la technique le plus proche de l'objet de la revendication 1, divulgue un ensemble d'interface entre un utilisateur et un dispositif électronique comportant une logique de commande et un écran cathodique rectangulaire à balayage où un spot lumineux occupe successivement tous les points de l'écran selon un cycle de balayage prédéterminé. Cet ensemble comprend un boîtier de commande comportant un capteur d'éclairement ayant un champ de détection qui se limite à une zone réduite de l'écran, un amplificateur pour le capteur déclairement, des moyens de détection de l'apparition du spot lumineux dans le champ de détection du capteur pour produire un signal de niveau logique prédéterminé.

Les écrans cathodiques habituellement rencontrés sont de forme sensiblement rectangulaire et comportent par exemple environ 625 lignes sur leur largeur et 800 points par ligne. Le spot lumineux se déplace successivement sur tous les points de chaque ligne et parcourt une ligne à une vitesse de balayage de l'ordre de 64 microsecondes par exemple.

L'invention s'applique en particulier aux télécommandes pour commander le fonctionnement d'une télévision ou d'un magnétoscope. La commande du fonctionnement de ces dispositifs au moyen des télécommandes habituellement rencontrées est fastidieuse dans la mesure où les fenêtres d'option de commande doivent être successivement affichées à l'écran pour qu'un utilisateur puisse sélectionner l'un des modes de fonctionnement de la télévision ou du magnétoscope.

La présente invention a pour but de remédier aux inconvénients précités en fournissant un ensemble d'interface qui permette une commande aisée d'un dispositif électronique et ce, par des moyens simples, efficaces et peu coûteux.

Ce but est atteint par l'ensemble d'interface défini dans la revendication 1.

D'autres caractéristiques et avantages de l'invention apparaîtront au cours de la description détaillée suivante d'une de ses formes de réalisation, donnée à titre d'exemple non limitatif, en regard des dessins annexés sur lesquels :

- la figure 1 est une vue schématique avec schéma-blocs de l'ensemble d'interface selon la présente invention comprenant un boîtier de commande ;
- les figures 2 à 5 représentent schématiquement les capteurs d'éclairement du boîtier de commande de la figure 1 ;
- la figure 6 représente les instants d'éclairement du spot lumineux détectés par les capteurs pour permettre le calcul de la position visée sur l'écran ;
- la figure 7 représente une variante de réalisation de la méthode de calcul de la position visée sur l'écran ; et
- la figure 8 représente une variante de réalisation du boîtier de commande comprenant deux capteurs d'éclairement ayant des champs de détection réduits.

L'ensemble d'interface selon la présente invention prend par exemple la forme d'un boîtier de télécommande 1 destiné à être utilisé par un opérateur pour commander le fonctionnement d'un dispositif électronique 2 qui est associé à un écran cathodique à balayage 3.

Le dispositif électronique 2 permet d'afficher des informations sur l'écran à tube cathodique 3 telles qu'une image vidéo fixe ou animée, des textes, ou des menus ou analogues. A partir des informations affichées sur l'écran cathodique 3, l'opérateur effectue un choix et/ou saisit des données à l'aide du boîtier de commande 1 placé à distance de l'écran 3 et qui va être décrit ci-après.

Le boîtier de commande 1 comprend deux capteurs d'éclairement D1 et D2 tels que des photo-diodes dont les axes peuvent être parallèles et voisins, mais dont les angles de capture sont différents.

Le champ de détection de l'un des détecteurs, par exemple du capteur d'éclairement D1, est large et contient tout l'écran 3, tandis que le champ de détection du capteur d'éclairement D2 est réduit et se limite à une zone Z de l'écran pointée à l'intérieur de la surface de l'écran. Dans le cas où la zone Z se présente sous la forme d'un carré ou d'un rectangle, le rapport des côtés de la zone Z sur les côtés de l'écran 3 sera approximativement compris entre par exemple 0,1 et 0,01. En variante, le capteur d'éclairement D1 comporte un champ de détection qui contient uniquement la partie supérieure gauche de cet écran.

Le capteur d'éclairement D1 est adapté pour que son champ de détection contienne tout l'écran 3, ou en variante uniquement la partie supérieure gauche de l'écran, même quand l'utilisateur vise la partie inférieure droite dudit écran avec son boîtier de télécommande 1.

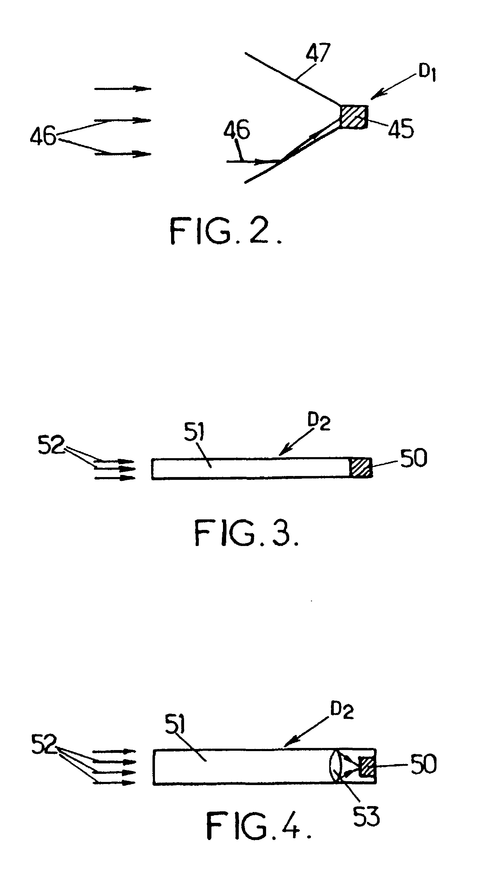

Le capteur d'éclairement D1 est constitué d'un simple détecteur d'éclairement ou bien, comme cela est plus particulièrement représenté à la figure 2, il est constitué d'un détecteur d'éclairement 45 en amont duquel, par rapport au sens de déplacement des rayons lumineux 46, est placé un miroir conique 47. Ce miroir définit un angle permettant de concentrer les rayons incidents vers le détecteur 45.

En variante, le miroir conique 47 peut être remplacé par un système de lentilles optiques grand angle pour focaliser les rayons lumineux 46 sur la surface active du détecteur d'éclairement 45.

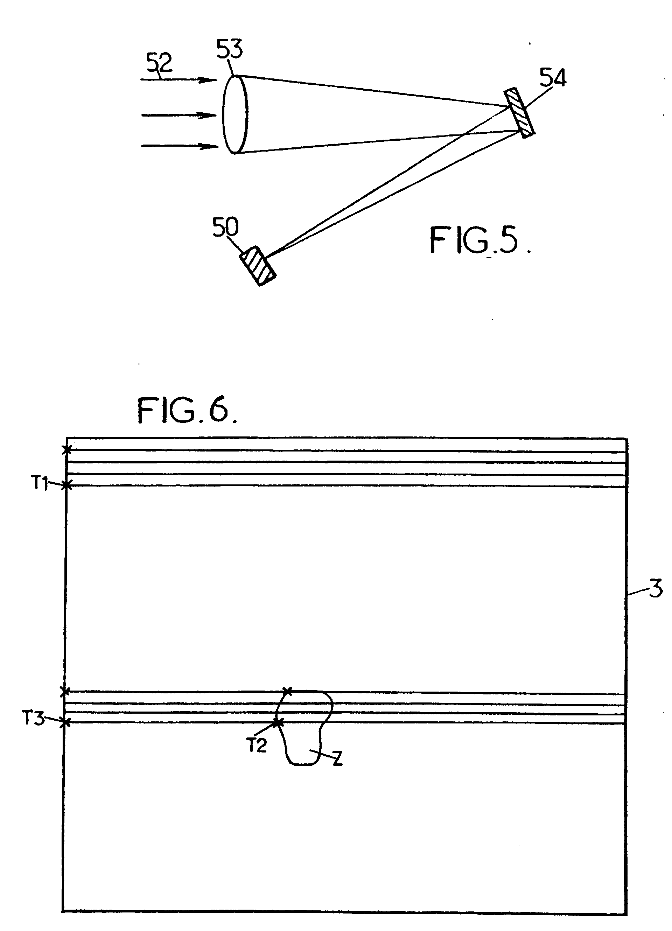

Le capteur d'éclairement D2 est constitué, figure 3, d'un détecteur d'éclairement 50 placé éventuellement au fond d'un tube étroit 51 dont la surface intérieure absorbe les rayons lumineux 52. Dans une variante représentée à la figure 4, le capteur D2 comprend, outre le détecteur 50 et le tube 51, un système de lentilles optiques 53, qui est assimilable optiquement à une lentille convexe. Ce système permet d'améliorer la sensibilité et la directivité du capteur en focalisant sur une partie active du détecteur 50, car les rayons lumineux 52 en provenance de la zone Z visée sont captés par le système dont la surface est nettement supérieure au détecteur. Selon une autre variante représentée sur la figure 5, les rayons lumineux 52 en provenance de la zone Z visée sont captés par le système de lentilles 53 puis sont réfléchis sur un miroir 54 avant d'être renvoyés sur le détecteur 50. Le miroir 54 peut être formé par un miroir plan. Ainsi, la longueur focale du dispositif de focalisation qui correspond aux lentilles 53 et aux miroirs 54 est très supérieure aux dimensions de la partie active du détecteur 50, de telle sorte que ce dispositif de focalisation assure pour le détecteur 50 une fonction analogue à celle d'un téléobjectif en photographie.

Dans tous les cas, les rayons lumineux 46 et 52 proviennent de l'écran cathodique 3 placé à distance de sorte que ces rayons peuvent être considérés comme provenant d'une source commune et distante, et comme sensiblement parallèles entre eux si les axes des capteurs D1 et D2 sont proches et parallèles.

Le signal fourni par les capteurs D1 et D2 se compose d'un bruit blanc et d'un courant proportionnel à son éclairement. Par exemple, on peut utiliser la photodiode amplifiée de Texas Instrument ayant pour référence TSL252.

Chaque capteur est reliée à un ensemble réalisant les fonctions suivantes :

- filtre passe-haut à fréquence de coupure de 10 kHz et 6db/octave d'atténuation, ce qui permet d'éliminer l'influence de la lumière du jour et de ses variations, ainsi que l'effet des éclairages artificiels, qui fournissent typiquement une lumière dont l'intensité est modulée avec une fréquence de 100 ou 120 Hz suivant les pays ;
- amplification large bande.

Ces deux fonctions peuvent être réalisées par exemple au moyen d'amplificateurs opérationnels à large bande montés de façon classique. On peut par exemple utiliser l'amplificateur fabriqué par STMicroelectronics sous la référence TSH94.

L'amplification du signal doit avoir une bande passante la plus élevée possible pour fournir une position calculée avec une bonne précision. Les photo-diodes ont un temps de réponse très rapide, de l'ordre de la microseconde. Il sera toutefois nécessaire de limiter la bande passante des amplificateurs à la bande passante utile du signal, qui est de quelques centaines de kilohertz au maximum, si les capteurs D1 et D2 sont susceptibles de fournir des signaux ou du bruit à une fréquence supérieure.

La détection du spot lumineux dans le champ de capture de chaque capteur d'éclairement D1 et D2 est réalisée au moyen de comparateurs alimentés par le signal alternatif fourni par les étages d'amplification et dont la tension de référence est réglée à un niveau supérieur à celui du bruit ambiant.

Par exemple, chaque comparateur est du type LM329 dont la tension de référence est établie à 6db au dessus du niveau de bruit blanc.

Les deux comparateurs sont reliés à un micro-contrôleur 60 qui permet de mesurer l'instant où le signal logique correspondant à chaque capteur a changé.

Le micro-contrôleur doit permettre des mesures de temps avec une précision de 0.5 ou 1 microseconde sur plusieurs signaux logiques simultanément. Il est possible d'utiliser un micro-contrôleur fabriqué par STMicrotechnics dans la gamme ST7, qui comporte des moyens d'acquisition de données temporelles d'entrée et de capacité de mémoire vive suffisants, et dont la vitesse de traitement maximum permet en moins de 64 microsecondes de traiter le signal logique associé au capteur D1 ainsi que le signal logique associé au capteur D2.

On pourra par exemple utiliser un microcontroleur de la gamme ST7 possédant les caractéristiques suivantes :

- mémoire vive de 384 octets (qui permet la mémorisation de plusieurs dizaines de mesures d'instants d'apparition des signaux logiques associés au début de l'éclairement des capteurs D1 et D2),
- deux timers de 16 bits avec deux canaux chacun,
- horloge du microcontrôleur pilotée par un quartz en raison de la précision requise pour les mesures de temps.

Le microcontroleur est par exemple configuré de la manière suivante :

- trois broches sont utilisées pour recevoir des signaux logiques et déclencher des interruptions :

  . une broche pour le signal logique correspondant au début de l'éclairement du capteur D1,
  . une broche pour le signal logique correspondant au début de l'éclairement du capteur D2,
  . une broche pour le signal logique correspondant à l'absence pendant 1 à 2 millisecondes du signal correspondant à l'éclairement du capteur D1. Cette application sera décrite plus en détail dans la suite de la description ;

- le premier timer a ses deux canaux configurés en acquisition de données, ce qui permet au microcontroleur de mémoriser automatiquement dans sa mémoire l'instant d'apparition sur ses broches de chacun des signaux logiques associés au début de l'éclairement des capteurs D1 et D2 et de générer une interruption pour chacun des signaux logiques ;

- le deuxième timer génère des interruptions périodiques et sert d'horloge système.

Certains signaux vidéo ont une fréquence ligne bien plus élevée que celle des standards PAL, SECAM ou NTSC (qui est de l'ordre de 16 Khz, ce qui correspond à une durée de ligne de 64 microsecondes environ). Par exemple, les écrans des moniteurs informatiques ont des fréquences lignes de 60 KHz ou plus, ce qui correspond à une durée d'une ligne de 16,7 microsecondes ou moins.

Pour pouvoir effectuer les mesures de temps et de position avec les moyens précédents, on se ramène au cas d'une fréquence ligne au voisinage de 16 Khz en ne sélectionnant au moyen d'un assemblage de portes logiques qu'un signal logique sur N pour les signaux logiques correspondant aux débuts d'éclairement des capteurs D1 et D2.

Par exemple, si la fréquence ligne est de 60 KHz, on ne sélectionnera qu'un signal sur 4 et on se ramènera ainsi au cas d'une fréquence ligne de 15 Khz.

Le micro-contrôleur 60 est relié à l'interface utilisateur permettant à l'utilisateur d'indiquer que le boîtier doit effectuer une mesure de position de la zone Z.

Selon une première variante de l'invention, lorsque l'on veut connaître la position de la zone Z de l'écran pointée et que le champ de détection du capteur D1 ne contient que la partie supérieure gauche de l'écran, le micro-contrôleur procède comme suit (en référence à la figure 6) :

- il surveille le niveau logique du signal provenant du capteur d'éclairement D1 dont le champ de détection inclut seulement la partie supérieure gauche de cet écran ;
- il détecte l'existence d'une période de temps sans détection de signal qui correspond au moins à la période de temps nécessaire au passage du spot du coin inférieur droit de l'écran au coin supérieur gauche de cet écran. De manière connue en soi, la période de temps correspondant au passage du spot du coin inférieur droit de l'écran au coin supérieur gauche de cet écran varie de 1 à 2 millisecondes suivant les standards européen ou américain de télévision (PAL, SECAM, NTSC) et aucune nouvelle ligne ou image n'est alors affichée sur l'écran pendant cette période. Ainsi, lorsque le champ de détection du capteur D1 inclut seulement le coin supérieur gauche de l'écran et en sachant que le spot balaye une ligne de l'écran en 64 microsecondes environ, le micro-contrôleur sera apte à détecter l'absence du spot dans le champ de détection du capteur D1. Lorsque la période d'absence du spot dans le champ de détection du capteur D1 est au moins égale à 1 ou 2 millisecondes, le micro-contrôleur est alors apte à savoir que la réapparition du spot se fera nécessairement dans le coin supérieur gauche de l'écran. De même, lorsque le champ de détection du capteur D1 inclut tout l'écran et en sachant que le spot balaye toujours une ligne de l'écran en 64 microsecondes environ, le micro-contrôleur sera également apte à détecter l'absence du spot dans le champ de détection du capteur D1. Lorsque la période d'absence du spot dans le champ de détection du capteur D1 est au moins égale à 1 ou 2 millisecondes, et que l'image affichée ne comporte pas un nombre de lignes très sombres tel que le capteur D1 ne détecte pas le spot pendant cette même période de 1 à 2 millisecondes, le micro-contrôleur est alors apte à savoir que la réapparition du spot se fera nécessairement dans le coin supérieur gauche de l'écran. Cette détection de l'absence d'éclairement du capteur D1 pendant une période d'au moins 1 à 2 millisecondes peut être directeur effectuée par le micro-contrôleur ou par un circuit électronique adapté disposé en sortie du comparateur associé au capteur D1, ce circuit envoyant alors un signal au micro-contrôleur ;

- il détecte ensuite le changement de niveau logique généré par le comparateur alimenté par le signal du capteur d'éclairement D1 correspondant au retour du spot dans le coin supérieur gauche. Dans ce cas, le micro-contrôleur affecte à ce premier signal l'instant T1 qui correspond au début de balayage d'une nouvelle image. Toutefois, sans sortir du cadre de l'invention, le micro-contrôleur peut également ignorer systématiquement les premiers signaux émis par le capteur D1, par exemple les trois premiers signaux qui correspondent au balayage des trois premières lignes et affecter au quatrième signal l'instant T1 qui correspond alors au début de balayage d'une nouvelle image (figure 6). En effet, il peut s'avérer utile d'ignorer au moins les trois premières lignes de balayage de l'écran étant donné les fluctuations de la vitesse du spot lors des premiers balayages. Dans la suite de la description, on entend par signal correspondant au début de balayage de l'image, non pas le signal émis par le balayage de la première ligne de l'écran, mais le premier signal émis par le capteur D1 qui sera détecté et mémorisé par le micro-contrôleur 60 ;

- il détecte ensuite l'instant T2 du changement de niveau logique généré par le comparateur alimenté par le signal du capteur D2 dont le champ de détection est limité à la zone Z pointée. Comme dans le cas précédent, le micro-contrôleur peut affecter l'instant T2 au changement de niveau qui correspond au début du passage du spot dans la zone visée, c'est-à-dire à la première ligne de la zone visée ou alors au changement de niveau logique correspondant, par exemple, au quatrième passage du spot dans la zone Z visée en ignorant par conséquent les trois premiers signaux émis par le capteur D2.

Les moyens de traitement arithmétiques du boîtier ou du dispositif électronique 2 calculent alors la position du début de la zone Z visée à partir des instants T1 et T2 selon le principe suivant :

- la position du début de cette zone commence à la ligne dont le numéro est donné par le calcul suivant :

$$\text{Valeur entière } [(T2-T1) / \text{Tligne}]$$

sachant que Tligne est la durée de balayage d'une ligne par le spot,
- à l'intérieur de cette ligne dont le numéro vient d'être calculé, la position du début de la zone Z, exprimée en pourcentage de longueur de ligne est donnée par le calcul suivant :

$$[(T2-T1)\text{Modulo}(\text{Tligne})] / \text{Tligne}$$

sachant que (T)Modulo(Tligne) est le reste de la division de T par Tligne.

On remarquera que :

- l'opération Valeur entière[(T2-T1) / Tligne] revient à éliminer de (T2-T1) la durée qui correspond à une fraction de ligne. En conséquence, Valeur entière [(T2-T1) ] est directement comparable et égal à la durée qui s'écoule entre d'une part le début de l'éclairement du capteur D1 au début du balayage de l'image (instant T1) et d'autre part le début de l'éclairement (bord gauche de l'écran 3) de la première ligne de balayage qui éclaire le capteur D2 ;
- l'opération Modulo(Tligne) revient à soustraire de (T2-T1) la durée correspondant au balayage des lignes de l'écran 3 avant que le capteur D2 ne soit éclairé. En conséquence [(T2-T1)Modulo(Tligne)] est directement comparable et égal à la durée qui s'écoule au cours de la première ligne de balayage qui éclaire le capteur D2 entre d'une part le début de l'éclairement (bord gauche de l'écran) et d'autre part le début de l'éclairement du capteur D2.

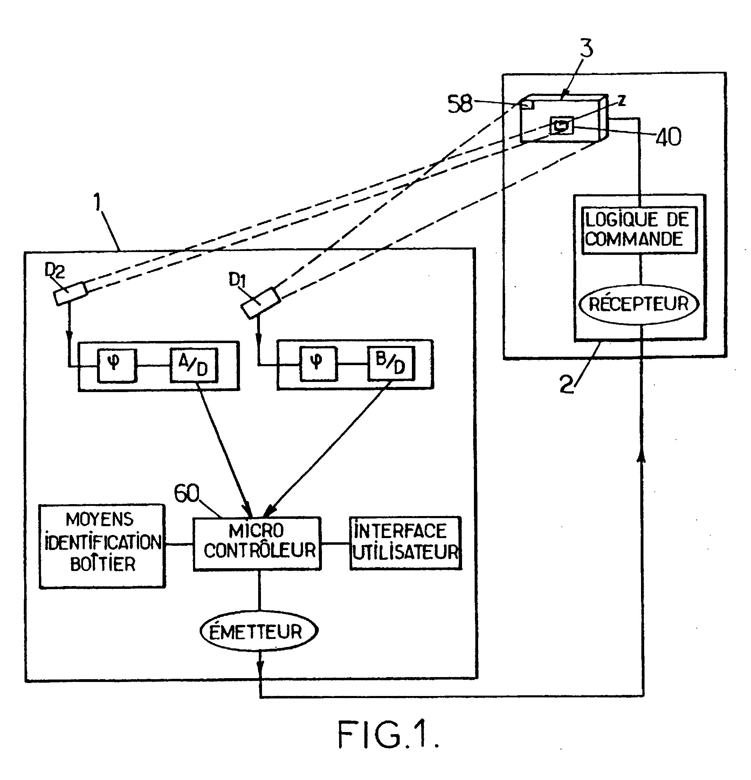

Pour augmenter la précision et la fiabilité de la détection du début de l'affichage d'image à l'écran 3, le dispositif électronique maintient affiché en permanence une portion 58 de couleur claire (figure 1) dans le coin supérieur gauche de l'image affichée à l'écran 3. Cette portion est de dimensions réduites par rapport à l'écran, et est par exemple de forme carrée dont le côté est égal à 2 à 5% de la valeur de la diagonale de l'écran. De préférence, la portion 58 est de couleur blanche.

Selon une autre variante de l'invention, lorsque l'on veut connaître la position de la zone Z visée sur l'écran et que le champ de détection du capteur D1 contient tout l'écran, le micro-contrôleur 60 peut également procéder comme suit (figure 6) :

- il détecte et mémorise les instants T1 et T2 comme décrit précédemment, et
- il détecte, en outre, l'instant T3 du changement de niveau logique qui correspond au début de l'éclairement du capteur D1 par la même ligne de balayage qui éclaire également le capteur D2 (instant T2). Pour ce faire, le micro-contrôleur 60 valide uniquement la mémorisation de l'instant T3 si le spot lumineux éclaire également le capteur D2 dans une période de temps inférieur à la durée de balayage totale de la ligne, c'est-à-dire environ 64 microsecondes.

Les moyens de traitement arithmétiques du boîtier ou du dispositif électronique 2 calculent alors la position du début de la zone Z visée à partir des instants T1, T2 et T3 selon le principe suivant :

- la position du début de cette zone commence à la ligne dont le numéro est donné par le calcul suivant :

$$\text{Valeur entière } [(T3-T1)/\text{Tligne}]$$

- à l'intérieur de cette ligne dont le numéro vient d'être calculé, la position du début de la zone Z, exprimée en pourcentage de longueur de ligne est donnée par le calcul suivant :

$$(T2-T3) / \text{Tligne}$$

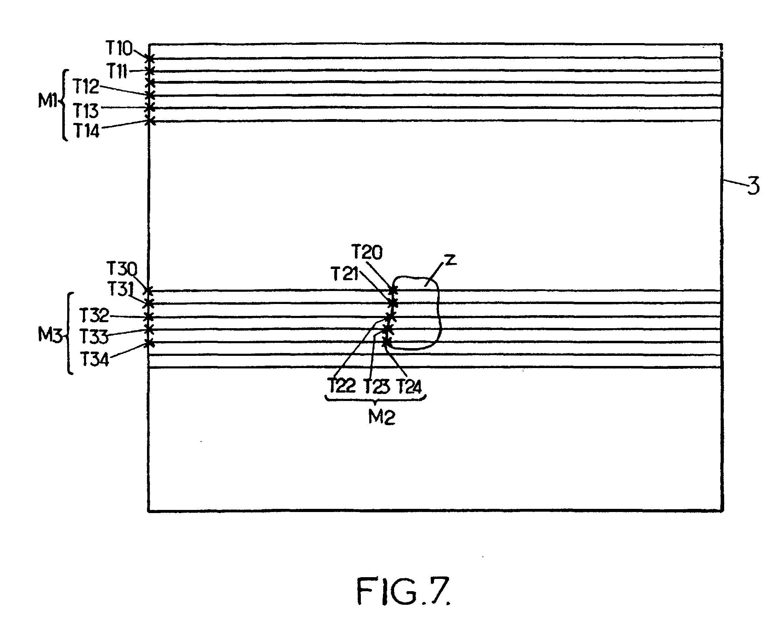

où "Tligne" correspond toujours à la durée de balayage d'une ligne par le spot.
Selon une autre variante représentée sur la figure 7, lorsque l'utilisateur souhaite connaître la position de la zone Z visée, le micro-contrôleur peut mémoriser plusieurs instants d'éclairement des capteurs D1 et D2. Dans ce cas, le micro-contrôleur peut procéder comme suit :

- il ignore systématiquement les instants des premiers signaux émis par le capteurs D1 et par le capteur D2, par exemple les deux premiers instants d'éclairement T10, T11 ; T20, T21 et T30, T31 pour chacun des capteurs D1 et D2 ;
- il mémorise les instants T12, T13 et T14 des signaux correspondant à l'éclairement du capteur D1 pour plusieurs lignes de balayage correspondant au début de l'image(par exemple les signaux correspondant aux trois premières lignes de balayage de l'écran qui sont prises en compte par le micro contrôleur 60) ;

- il calcule la moyenne M1 des instants T12, T13 et T14 ainsi mémorisés ;
- il mémorise les instants T32, T33 et T34 des signaux correspondant à l'éclairement du capteur D1 pour plusieurs lignes de balayage qui correspondent à des instants d'éclairement T22, T23 et T24 du capteur D2 (par exemple les signaux correspondant aux trois premières lignes de balayage de l'écran qui éclairent le capteur D2 et qui sont prises en compte par le micro-contrôleur 60) ;
- il calcule les moyennes respectives M2 et M3 des instants T22, T23, T24 et des instants T32, T33, T34 ainsi mémorisés.

Les moyens de traitement arithmétiques du boîtier ou du dispositif électronique 2 calculent alors la position du début de la zone Z visée à partir des moyennes précédemment calculées selon le principe suivant :

- la position du début de cette zone commence à la ligne dont le numéro est donné par le calcul suivant :

$$\text{Valeur entière } [(M3-M1) / Tligne]$$

sachant que Tligne est la durée de balayage d'une ligne par le spot,

- à l'intérieur de cette ligne dont le numéro vient d'être calculé, la position du début de la zone Z, exprimée en pourcentage de longueur de ligne est donnée par le calcul suivant :

$$[(M2-M3)/Tligne]$$

On peut en effet vérifier que cette méthode de calcul est compatible avec la précédente :

- la position en Y est calculée selon un principe identique, en remplaçant des valeurs isolées par des moyennes de ces mêmes valeurs,
- la position en X est calculée à partir d'une moyenne de durées entre le début de l'éclairement du capteur D1 et le début de l'éclairement du capteur D2 d'une même ligne de balayage. La remarque faite précédemment sur la signification de l'opération Modulo (Tligne) montre que la position en X est calculée à partir d'une moyenne de valeurs analogues dans leur nature à celles fournies par l'opération Modulo.

Bien entendu, ce mode de calcul suppose que l'écran 3 dans son entier est dans le champ du capteur D1.

On comprend également que le micro-contrôleur 60, selon la première variante, peut mémoriser plusieurs instants T1 et T2 et procéder au calcul de la position de la zone Z visée uniquement avec les moyennes M1 et M2 et en appliquant le mode de calcul faisant intervenir l'opération Modulo. De même, lorsque le champ de détection du capteur D1 contient tout l'écran, le micro-contrôleur pourra effectuer le calcul de la position en X de la zone visée à partir de M2 et M1 et appliquant l'opération Modulo et/ou à partir de M3 et M1 et procéder également à une moyenne des résultats obtenus par ces deux modes de calcul pour déterminer la position en X de la zone Z visée.

L'imprécision apportée par ces moyennes est très réduite eu égard au nombre de lignes d'une image de télévision (250 à 280 lignes utiles typiquement en PAL, SECAM, NTSC chaque 1/50ème ou 1/60ème de seconde) et à l'amélioration de la stabilité et de la reproductibilité des mesures apportées par ces moyennes.

La capacité des moyens de traitement logiques et arithmétiques du boîtier ou du dispositif électronique 2 est minimisée par la réduction du nombre de signaux qui leur est transmis et par la réduction du nombre d'informations émises vers le dispositif électronique pour matérialiser la position de la zone Z visée par un curseur. Ceci permet encore de minimiser la consommation d'énergie utilisée par ces moyens de traitement.

Par exemple, il n'y a pas d'émission d'informations vers le dispositif électronique si la position de la zone visée n'a pas varié d'un pourcentage prédéterminé et/ou pendant une période de temps prédéterminée.

Le curseur graphique 40 (figure 1) affiché par le système 2 sur l'écran 3 pour matérialiser la position visée par l'utilisateur peut prendre la forme de tout effet graphique visualisable par l'utilisateur, tel que par exemple un changement de couleur ou de forme d'un objet ou bien l'affichage clignotant d'une forme géométrique quelconque.

Le boîtier de commande selon la présente invention possède en outre des moyens de commande du dispositif électronique associé à l'écran. Il s'agit de moyens positivement actionnables par l'utilisateur tels que des touches, des potentiomètres, des capteurs de pression, une commande vocale ou bien encore un ou plusieurs manche(s) à balai permettant à l'utilisateur de transmettre des informations au dispositif électronique 2. Lorsque le dispositif électronique correspond par exemple à un jeu vidéo, il s'agit d'indiquer un déplacement ou de simuler un tir ou bien encore, lorsque le dispositif correspond à une télévision, il s'agit pour l'opérateur de sélectionner à distance une option d'un menu d'émissions de télévision.

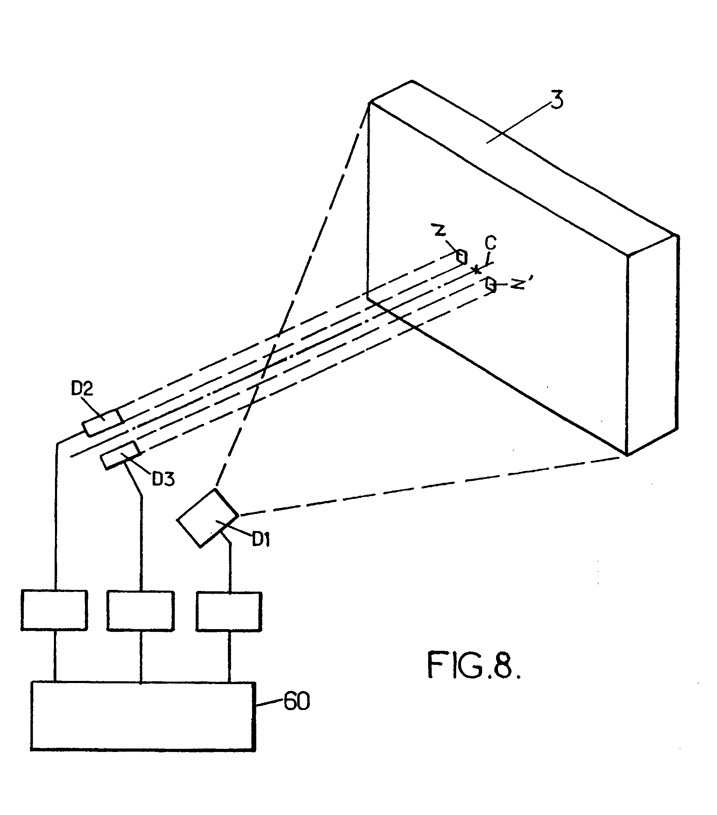

Selon une autre variante de l'invention représentée sur la figure 8, le boîtier de commande peut comporter deux capteurs D2 et D3 différents d'axes parallèles et voisins, ayant des champs de détection qui se limitent chacun à une zone réduite Z, Z' de l'écran. La présence du deuxième capteur d'éclairement D3 permet avantageusement au boîtier de mesurer la position des deux zones distinctes Z et Z' sur l'écran 3, et donc d'en déduire un angle de rotation du boîtier par rapport à l'axe commun C des capteurs D2 et D3. La gestion de deux capteurs D2 et D3 peut par exemple être réalisée de la manière suivante :

- chaque capteur D2 et D3 est associé à une chaîne d'amplification et de filtrage, ainsi qu'à un comparateur logique,
- (si le micro-contrôleur 60 n'est pas assez rapide pour traiter au cours d'une ligne de balayage tous les signaux logiques générés par les capteurs), un assemblage de portes logiques et de bascules permet de présenter au microprocesseur 60 alternativement les signaux logiques issus des comparateurs associés à chacun des capteurs D2 et D3 et de lui fournir l'indication du capteur D2 ou D3 auquel correspond le signal,
- le programme du micro processeur 60 est adapté pour traiter cette alternance de signaux ou le signal du nouveau capteur D3 et calculer la position des deux zones Z et Z'. Le micro-contrôleur 60 ou le dispositif électronique 2 peuvent alors en déduire la position du milieu entre ces deux zones Z et Z' et l'angle de rotation du segment constitué par ces deux zones Z et Z' par rapport à un axe de référence formé par l'axe commun C des deux capteurs D2 et D3.

En variante, plusieurs boîtiers de commande peuvent être associés à un seul dispositif électronique, en particulier lorsque plusieurs joueurs utilisent simultanément le même jeu vidéo. Il est alors nécessaire que chacun des boîtiers de commande possède des moyens d'identification pour permettre au dispositif électronique de reconnaître chacun de ces boîtiers.
De plus, chacun des boîtiers de commande peuvent en outre comporter des moyens de réémission des informations à transmettre au dispositif électronique pour minimiser la probabilité que deux boîtiers de commande émettent simultanément et donc pour augmenter la probabilité que l'information soit correctement reçue par le dispositif électronique.
Le boîtier de commande peut aussi contenir une combinaison de moyens d'identification accessibles électriquement par le microcontrôleur 60, tels que des mémoires électroniques contenant un numéro de série ou un ensemble de contacts électriques tels que un ensemble d'interrupteurs qui conditionne le niveau logique sur des broches d'entrée du microcontrôleur 60. Les informations fournies par ces moyens d'identification peuvent être pris en compte par le microcontrôleur 60 dans le calcul des informations à transmettre, notamment suivant les manières suivantes :

- envoi périodique ou lié à l'envoi des informations de position des informations d'identification ou d'informations provenant de ces informations d'identification (par exemple envoi d'une partie de l'information d'identification lié à l'envoi de l'information de position),
- envoi de l'information de position à un instant défini en fonction de l'information d'identification.

Par ailleurs, chacun des boîtiers de commande peuvent, en outre :

- être synchronisés par rapport au début de l'image affichée sur l'écran 3, puisqu'ils détectent cet instant et peuvent se synchroniser sur cet événement grâce à l'horloge interne du microcontrôleur 60,
- émettre à des instants définis par un décalage propre à chaque boîtier par rapport à ce début d'image, le décalage étant défini en fonction de moyens d'identification du boîtier de commande.

En variante, le boîtier de commande peut détecter si l'utilisateur s'éloigne ou se rapproche sensiblement de l'écran. En effet, lorsque le capteur D2 vise une zone qui est totalement contenue dans l'écran, la durée de l'éclairement de ce capteur varie dans le même sens que la distance séparant le capteur D2 de l'écran 3. En mesurant le sens et l'intensité de la variation de cette durée d'éclairement sur, par exemple, les 20 dernières images observées, il est possible d'estimer si l'utilisateur s'est éloigné ou rapproché de manière appréciable de l'écran 3. La durée d'éclairement du capteur D2 pour chaque ligne étant de l'ordre de quelques microsecondes, et les variations typiques de cette durée étant de quelques pourcents, une méthode particulière de mesure du temps d'éclairement est utile.
On utilisera pour cela la mesure de la tension aux bornes d'un condensateur, qui est une fonction strictement croissante de la durée de la charge, par exemple selon la méthode suivante :

- le condensateur est initialisé par un court-circuit de ses bornes réalisé au moyen d'un transistor MOS commandé par le microcontrôleur 60 avant le début de chaque image ;
- une fois par image, durant une ligne du balayage de l'écran sélectionnée par le microcontrôleur 60 (par exemple la troisième), le condensateur est chargé par un courant ou une tension constante commandée par un autre transistor MOS qui laisse passer le courant de charge uniquement pendant la durée du signal logique constitué par un ET logique des deux signaux suivants :

  . le signal logique fourni par le comparateur associé au capteur D2 (en supposant qu'il est à 1 lorsque le capteur D2 est éclairé),
  . un signal logique généré par le micro-contrôleur 60 dont le niveau est à 1 pendant toute la durée de la ligne de balayage pendant laquelle la mesure doit avoir lieu (ce signal peut par exemple être un signal de durée sensiblement égale à la durée de deux lignes de balayage et qui est initié par l'éclairage du capteur D2 au cours de la ligne de balayage qui précède celle au cours de laquelle la mesure aura lieu).

Le courant de charge du condensateur doit être suffisamment intense (plusieurs milliampères ou dizaines de milliampères) pour ne pas introduire d'erreurs significatives durant la période ultérieure d'attente et de mesure de tension à ces bornes.

La mesure de la tension à ses bornes, qui est une fonction strictement croissante de la durée de la charge, est alors réalisée une fois par image (par exemple dès que la fin de l'éclairement a été détectée)au moyen d'un convertisseur analogique/numérique intégré au micro-contrôleur 60. Cette mesure est typiquement réalisée en quelques micro secondes par les micro-contrôleurs actuels. La gamme ST7 comprend des micro-contrôleurs équipés de tels convertisseurs.

Le ou les boîtiers de commande et le dispositif électronique possèdent respectivement un émetteur et un récepteur d'information qui communiquent par un câble ou par ondes telles que des ondes électromagnétiques (notamment infrarouges ou radio), ou ondes acoustiques (notamment ultrasons).

Par ailleurs, le dispositif électronique peut comporter des moyens d'indication à l'un au moins des boîtiers de commande que les signaux émis par ce boîtier ne sont pas compréhensibles, ou que le dispositif attend des informations d'un type bien précis de la part du boîtier de télécommande. Les signaux émis par les boîtiers peuvent ne pas être compréhensibles pour des raisons diverses, et notamment lorsque plusieurs boîtiers émettent simultanément. Le dispositif peut demander des informations de types différents par exemple dans les cas suivants :

- demande d'envoi (ou de fin d'envoi) d'informations générées par les moyens positivement et sélectivement actionnables associés au boîtier de télécommande,
- demande d'envoi (ou de fin d'envoi) d'informations d'identification associées au boîtier de télécommande,
- demande d'envoi plus fréquent ou moins fréquent des informations de position,
- demande d'envoi d'informations de position avec des traitements complémentaires tels que des moyennes réalisées sur plusieurs images afin d'améliorer la précision des informations (en contrepartie d'une fréquence d'envoi plus réduite de ces informations).

Les demandes d'informations de types différents peuvent être sélectivement destinées à un ou plusieurs boîtiers.

Les moyens d'indication peuvent par exemple consister en une non émission d'image par le tube cathodique ou par une partie sélectionnée de ce dernier et ce, pendant un intervalle de temps prédéterminé. Cet intervalle de temps peut être suffisamment bref pour qu'il n'y ait pas de suppression d'image pour l'oeil humain, mais peut être suffisamment long pour que cette suppression soit détectable par les boîtiers de commande. L'intervalle de temps peut par exemple correspondre à une non émission d'image pendant une image, soit 1/50ème ou 1/60ème de seconde.

Ces moyens d'indication peuvent aussi être l'envoi d'une séquence prédéterminée d'intensités lumineuses qui peuvent être assimilées à des images ou des parties d'images très illuminées, moyennement illuminées ou très peu illuminées.

## Revendications

1. Ensemble d'interface entre un utilisateur et un dispositif électronique (2) comportant une logique de commande et un écran cathodique rectangulaire à balayage (3) où un spot lumineux occupe successivement tous les points de l'écran (3) selon un cycle de balayage prédéterminé, l'ensemble comprenant
un boîtier de commande (1) placé à distance de l'écran cathodique (3);

   - le boîtier de commande comportant :

      . au moins deux capteurs d'éclairement adaptés au balayage de l'écran par le spot lumineux :

         . un premier capteur d'éclairement (D1) ayant un champ de détection qui comprend au moins la partie supérieure gauche de l'écran (3) ;
         . un deuxième capteur d'éclairement (D2) ayant un champ de détection qui se limite à une zone (Z) réduite de l'écran (3) ;

      . un amplificateur à large bande et un filtre passe-haut pour chacun des capteurs d'éclairement ;
      . des moyens de détection de l'apparition du spot lumineux dans le champ de détection de chacun des capteurs pour produire un signal de niveau logique prédéterminé ;

   - des moyens de traitements logiques et arithmétiques des signaux logiques pour calculer la position de la zone (Z) visée sur l'écran à partir au moins, d'une part, de l'instant d'apparition du signal logique correspondant au premier capteur d'éclairement (D1) dont le champ de détection comprend au moins la partie supérieure gauche de l'écran et qui correspond au début de balayage de l'image et d'autre part, de l'instant d'apparition du signal logique correspondant au deuxième capteur d'éclairement (D2) dont le champ de détection est réduit, et qui correspond au passage du spot lumineux devant la zone (Z) visée ; et

- une chaîne de transmission du boîtier (1) vers le dispositif électronique (2), le dispositif comprenant une logique adaptée pour être modifiée par les informations reçues.

2. Ensemble d'interface selon la revendication 1, dans lequel les moyens de traitements logiques et arithmétiques des signaux logiques calcule la position de la zone Z visée sur l'écran à partir de la différence de temps existant entre, d'une part, l'instant d'apparition du signal logique correspondant au premier capteur d'éclairement (D1) dont le champ de détection comprend au moins la partie supérieure gauche de l'écran et qui correspond au début de balayage de l'image, et d'autre part, l'instant d'apparition du signal logique correspondant au deuxième capteur d'éclairement (D2) dont le champ de détection est réduit et qui correspond au passage du spot lumineux devant la zone (Z) visée.

3. Ensemble d'interface selon la revendication 1, dans lequel le champ de détection du premier capteur (D1) contient tout l'écran (3) et les moyens de traitements logiques et arithmétiques des signaux logiques calculent la position de la zone (Z) visée sur l'écran en se fondant, en outre, sur l'instant d'apparition du signal logique correspondant au premier capteur d'éclairement (D1) sur une ligne qui correspond également au passage du spot lumineux devant la zone (Z) visée.

4. Ensemble d'interface selon la revendication 3, dans lequel les moyens de traitements logiques et arithmétiques sont également aptes à :

- mémoriser les instants d'apparition des signaux logiques correspondant au premier capteur d'éclairement (D1) pour plusieurs lignes qui correspondent au début de balayage de l'écran,
- mémoriser pour plusieurs lignes de balayage, les instants des signaux correspondants à l'éclairement desdits capteurs (D1, D2) par le passage du spot lumineux sur une même ligne.

5. Ensemble d'interface selon l'une quelconque des revendication précédentes, dans lequel le premier capteur d'éclairement (D1) et le deuxième capteur d'éclairement (D2) présentent des axes parallèles et proches.

6. Ensemble d'interface selon l'une quelconque des revendications précédentes, dans lequel le premier capteur d'éclairement (D1) dont le champ de détection comprend au moins la partie supérieure gauche de l'écran (3), comporte un détecteur d'éclairement (45) et un dispositif de focalisation (47) pour améliorer la sensibilité du capteur.

7. Ensemble d'interface selon la revendication 6, dans lequel le dispositif de focalisation est choisi parmi un miroir conique et un système de lentilles optiques.

8. Ensemble d'interface selon l'une quelconque des revendications précédentes, dans lequel le deuxième capteur d'éclairement (D2) dont le champ de détection est réduit comprend un détecteur d'éclairement (50) et un système de focalisation (53) pour focaliser la lumière provenant de la zone (Z) visée sur la surface active du détecteur (50).

9. Ensemble d'interface selon l'une quelconque des revendications précédentes, dans lequel l'écran (3) comprend, dans la partie supérieure gauche, une portion (58) de surface réduite et dont la couleur est claire.

10. Ensemble d'interface selon l'une quelconque des revendications précédentes, dans lequel le dispositif électronique (2) comprend en outre des moyens de commande de l'écran pour afficher à l'écran un effet graphique (40) en une position en relation avec la zone (Z) avisée.

11. Ensemble d'interface selon la revendication 10, dans lequel le boîtier de commande (1) comprend des moyens sélectivement actionnables par l'utilisateur et dont le résultat de l'action est transmis au dispositif électronique (2) par le boîtier (1).

12. Ensemble d'interface selon la revendication 11, dans lequel les moyens de commande sélectivement actionnables sont choisis parmi des touches, des potentiomètres, des capteurs de pression, des capteurs d'angle, des capteurs de position, des gyroscopes, au moins une commande vocale et au moins un manche à balai.

13. Ensemble d'interface selon l'une quelconque des revendications 10 à 12, dans lequel le boîtier de commande (1) transmet des informations au dispositif électronique (2) lorsque la position de la zone (Z) visée a changé d'une valeur minimale prédéterminée.

14. Ensemble d'interface selon l'une quelconque des revendications 10 à 13, dans lequel le boîtier de commande (1) comprend en outre des moyens d'identification adaptés pour que le dispositif électronique (2) reconnaisse le boîtier de commande, ces moyens d'identification générant sélectivement des données d'identification du boîtier (1) envoyées au dispositif électronique (2).

**15.** Ensemble d'interface selon la revendication 14, dans lequel plusieurs boîtiers de commande (1) communiquent avec le dispositif électronique (2) et les moyens de commande du dispositif de chaque boîtier de commande transmettent un certain nombre de fois leurs informations au dispositif électronique (2) pour augmenter la probabilité que le dispositif électronique reçoive les informations émises par chaque boîtier sans interférence avec les informations émises par les autres boîtiers.

**16.** Ensemble d'interface selon la revendication 13, dans lequel plusieurs boîtiers de commande (1) communiquent avec le dispositif électronique (2) et les moyens de commande du dispositif de chaque boîtier de commande transmettent leurs informations au dispositif électronique (2) en étant synchronisés par rapport au début de l'image affichée sur l'écran (3), et à des instants définis par des décalages spécifiques à chaque boîtier par rapport au début d'image.

**17.** Ensemble d'interface selon l'une ou l'autre des revendication 15 et 16, dans lequel le dispositif électronique (2) comporte des moyens qui provoquent la transmission de nouvelles informations par au moins l'un desdits boîtiers de commande (1).

**18.** Ensemble d'interface selon la revendication 17, dans lequel les moyens provoquant la transmission de nouvelles informations consistent en ce qu'au moins une partie de l'écran (3) affiche une séquence prédéterminée d'intensités lumineuses.

**19.** Ensemble d'interface selon l'une quelconque des revendications précédentes, dans lequel l'émetteur et le récepteur communiquent par ondes.

**20.** Ensemble d'interface selon l'une quelconque des revendications précédentes, dans lequel l'émetteur et le récepteur sont reliés par un câble de transmission.

**21.** Ensemble d'interface selon l'une quelconque des revendications précédentes, dans lequel le boîtier de commande comprend des moyens de mesure et de mémorisation périodiques du temps d'éclairement du deuxième capteur (D2) par le spot lumineux pour permettre une détection du rapprochement ou de l'éloignement du boîtier de commande de l'écran par la mesure de la variation du temps d'éclairement du capteur par ledit spot lumineux.

**22.** Ensemble d'interface selon l'une quelconque des revendications précédentes, dans lequel le boîtier de commande comprend, d'une part, deux capteurs d'éclairement (D2, D3) d'axes parallèles et proches ayant des champs de détection qui se limitent chacun à une zone réduite (Z, Z') de l'écran, et d'autre part, des moyens de traitement logiques et arithmétiques supplémentaires pour mesurer la position des deux zones distinctes (Z, Z') sur l'écran et permettre le calcul de l'angle de rotation du boîtier de commande par rapport à l'axe commun desdits capteurs d'éclairement (D2, D3).

## Patentansprüche

**1.** Schnittstellenanordnung zwischen einem Benutzer und einem elektronischen Gerät (2), das eine Steuerlogik und einen rechteckigen Abtastungs-Kathodenstrahlbildschirm (3) umfasst, bei dem ein Leuchtfleck nacheinander alle Punkte des Schirms (3) gemäß eines vorbestimmten Abtastungszyklus einnimmt, wobei die Anordnung umfasst eine Steuereinheit (1), die vom Kathodenstrahlbildschirm (3) beabstandet platziert ist;

- wobei die Steuereinheit umfasst:

    mindestens zwei Lichtaufnehmer, die an die Abtastung des Schirms durch den Leuchtfleck angepasst sind:

      einen ersten Lichtaufnehmer (D1), der ein Erfassungsfeld hat, das mindestens den oberen linken Teil des Schirms (3) umfasst;

      einen zweiten Lichtaufnehmer (D2), der ein Erfassungsfeld hat, das sich auf eine verkleinerte Zone (Z) des Schirms (3) beschränkt;

      einen Breitbandverstärker und ein Hochpassfilter für jeden der Lichtaufnehmer;

      Mittel zur Erfassung des Erscheinens des Leuchtflecks im Erfassungsfeld jedes Aufnehmers, um ein Signal vorbestimmten Logikpegels zu erzeugen;

- Mittel zur logischen und arithmetischen Verarbeitung von Logiksignalen, um die Position der auf dem Schirm anvisierten Zone (Z) zu berechnen, ausgehend zumindest von einerseits dem Zeitpunkt des Erscheinens des Logiksignals, das dem ersten Lichtaufnehmer (D1) entspricht, bei dem das Erfassungsfeld mindestens den oberen linken Teil des Schirms umfasst, und das dem Abtastungsbeginn des Bildes entspricht, und andererseits dem Zeitpunkt des Erscheinens des Logiksignals, das dem zweiten Lichtaufnehmer (D2) entspricht, bei dem das Erfassungsfeld verkleinert ist, und das dem Durchgang des Leuchtflecks vor der anvisierten Zone (Z) entspricht; und

- eine Übertragungskette von der Einheit (1) zum elektronischen Gerät (2), wobei das Gerät eine Logik umfasst, welche ausgebildet ist, um durch die empfangenen Informationen modifiziert zu werden.

2. Schnittstellenanordnung nach Anspruch 1, bei welcher die Mittel zur logischen und arithmetischen Verarbeitung von Logiksignalen die Position der auf dem Schirm anvisierten Zone (Z) ausgehend von der Zeitdifferenz berechnen, die existiert zwischen einerseits dem Zeitpunkt des Erscheinens des Logiksignals, das dem ersten Lichtaufnehmer (D1) entspricht, bei dem das Erfassungsfeld zumindest den oberen linken Teil des Bildschirms umfasst, und das dem Abtastungsbeginn des Bildes entspricht, und andererseits dem Zeitpunkt des Erscheinens des Logiksignals, das dem zweiten Lichtaufnehmer (D2) entspricht, bei dem das Erfassungsfeld verkleinert ist, und das dem Durchgang . des Leuchtflecks vor der anvisierten Zone (Z) entspricht.

3. Schnittstellenanordnung nach Anspruch 1, bei welcher das Erfassungsfeld des ersten Aufnehmers (D1) den gesamten Schirm (3) enthält, und die Mittel zur logischen und arithmetischen Verarbeitung von Logiksignalen die Position der anvisierten Zone (Z) auf dem Schirm außerdem auf der Grundlage des Zeitpunkts des Erscheinens des dem ersten Lichtaufnehmer (D1) entsprechenden Logiksignals auf einer Zeile, die auch dem Durchgang des Leuchtflecks vor der anvisierten Zone (Z) entspricht, berechnen.

4. Schnittstellenanordnung nach Anspruch 3, bei welcher die Mittel zur logischen und arithmetischen Verarbeitung ebenfalls geeignet sind zum:

- Speichern der dem ersten Lichtaufnehmer (D1) entsprechenden Logiksignale für mehrere Zeilen, die dem Beginn des Abtastens des Bildschirms entsprechen,

- Speichern der Zeitpunkte der Signale, die der Erleuchtung der Aufnehmer (D1, D2) durch den Durchgang des Leuchtflecks auf einer gleichen Zeile entsprechen, für mehrere Abtastungszeilen.

5. Schnittstellenanordnung nach einem der vorangehenden Ansprüche, bei welcher der erste Lichtaufnehmer (D1) und der zweite Lichtaufnehmer (D2) parallele und nahe Achsen aufweisen.

6. Schnittstellenanordnung nach einem der vorangehenden Ansprüche, bei der der erste Lichtaufnehmer (D1), dessen Erfassungsfeld mindestens den oberen linken Teil der Bildschirms (3) umfasst, einen Lichtdetektor (45) und eine Vorrichtung zur Fokussierung (47) umfasst, um die Empfindlichkeit des Aufnehmers zu Verbessern.

7. Schnittstellenanordnung nach Anspruch 6, bei welcher die Vorrichtung zur Fokussierung ein konischer Spiegel oder ein optisches Linsensystem ist.

8. Schnittstellenanordnung nach einem der vorangehenden Ansprüche, bei welcher der zweite Lichtaufnehmer (D2), dessen Erfassungsfeld verkleinert ist, einen Lichtdetektor (50) umfasst, und ein Fokussierungssystem (53), um das aus der anvisierten Zone (Z) stammende Licht auf die aktive Oberfläche des Detektors (50) zu fokussieren.

9. Schnittstellenanordnung nach einem der vorangehenden Ansprüche, bei welcher der Bildschirm (3) in dem oberen linken Teil einen Abschnitt mit verkleinerter Oberfläche umfasst, dessen Farbe hell ist.

10. Schnittstellenanordnung nach einem der vorangehenden Ansprüche, bei der das elektronische Gerät (2) außerdem Mittel zum Steuern des Bildschirms umfasst, um auf dem Bildschirm eine graphische Erscheinung (40) an einer auf die anvisierte Zone (Z) bezogenen Position anzuzeigen.

11. Schnittstellenanordnung nach Anspruch 10, bei welcher die Steuereinheit (1) Mittel umfasst, die vom Benutzer selektiv betätigbar sind, und das Betätigungsergebnis von der Einheit (1) an das elektronische Gerät (2) übertragen wird.

12. Schnittstellenanordnung nach Anspruch 11, bei welcher die selektiv betätigbaren Steuermittel Tasten und/oder Potentiometer und/oder Druckkraftaufnehmer und/oder Winkelaufnehmer und/oder Positionsaufnehmer und/oder Gyroskope und/oder mindestens eine Sprachsteuerung und/oder mindestens ein Joystick sind.

13. Schnittstellenanordnung nach einem der Ansprüche 10 bis 12, bei welcher die Steuereinheit (1) Informationen an das elektronische Gerät (2) überträgt, wenn sich die Position der anvisierten Zone (Z) um einen vorbestimmten Minimalwert geändert hat.

**14.** Schnittstellenanordnung nach einem der Ansprüche 10 bis 13, bei welcher die Steuereinheit (1) außerdem Identifikationsmittel umfasst, welche ausgebildet sind, damit das elektronische Gerät (2) die Steuereinheit erkennt, wobei die Identifikationsmittel selektiv Identifikationsdaten der Einheit (1) erzeugen, welche zum elektronischen Gerät (2) geschickt werden.

**15.** Schnittstellenanordnung nach Anspruch 14, bei welcher mehrere Steuereinheiten (1) mit dem elektronischen Gerät (2) kommunizieren, und die Gerätesteuermittel jeder Steuereinheit eine bestimmte Anzahl von Malen ihre Informationen an das elektronische Gerät (2) übertragen, um die Wahrscheinlichkeit zu erhöhen, dass das elektronische Gerät die von jeder Einheit ausgesendeten Informationen ohne Störung durch die von den anderen Einheiten ausgesendeten Informationen empfängt.

**16.** Schnittstellenanordnung nach Anspruch 13, bei welcher mehrere Steuereinheiten (1) mit dem elektronischen Gerät (2) kommunizieren, und die Gerätesteuermittel jeder Steuereinheit ihre Informationen an das elektronische Gerät (2) übertragen, synchronisiert bezüglich des Anfangs des auf dem Bildschirm (3) angezeigten Bildes, und zu Zeitpunkten, die durch für jede Einheit eigentümliche Verzögerungen bezüglich des Bildanfangs definiert sind.

**17.** Schnittenstellenanordnung nach Anspruch 15 oder 16, bei welcher das elektronische Gerät (2) Mittel umfasst, die die Übertragung von neuen Informationen durch mindestens eine der Steuereinheiten (1) auslösen.

**18.** Schnittenstellenanordnung nach Anspruch 17, bei welcher die Mittel, die die Übertragung von neuen Informationen auslösen, darin bestehen, dass mindestens ein Teil des Schirms (3) eine vorbestimmte Sequenz von Leuchtintensitäten anzeigt.

**19.** Schnittstellenanordnung nach einem der vorangehenden Ansprüche, bei welcher der Sender und der Empfänger mittels Wellen kommunizieren.

**20.** Schnittstellenanordnung nach einem der vorangehenden Ansprüche, bei welcher der Sender und der Empfänger durch ein Übertragungskabel verbunden sind.

**21.** Schnittstellenanordnung nach einem der vorangehenden Ansprüche, bei welcher die Steuereinheit Mittel zum Messen und periodischen Speichern der Belichtungszeit des zweiten Aufnehmers (D2) durch den Leuchtfleck umfassen, um die Erfassung eines Annäherns oder Entfernens der Steuereinheit vom Bildschirm zu gestatten, durch die Messung der Veränderung der Belichtungszeit des Aufnehmers durch den Leuchtfleck.

**22.** Schnittstellenanordnung nach einem der vorangehenden Ansprüche, bei welcher die Steuereinheit einerseits zwei Lichtaufnehmer (D2, D3) mit parallelen und nahen Achsen umfasst, die Erfassungsfelder haben, die sich jeweils auf eine verkleinerte Zone (Z, Z') des Bildschirms beschränken, und andererseits zusätzliche Mittel zur logischen und arithmetischen Verarbeitung, um die Position der zwei bestimmten Zonen (Z, Z') auf dem Schirm zu messen und die Berechnung des Drehwinkels der Steuereinheit bezüglich einer gemeinsamen Achse der Lichtaufnehmer (D2, D3) zu gestatten.

**Claims**

**1.** Interface system between a user and an electronic device (2) comprising a control logic circuit and a rectangular scanning cathode ray screen (3) in which a luminous spot occupies successively all the points on the screen (3) in accordance with a predetermined scanning cycle, the system comprising a control module (1) situated a distance away from the cathode ray screen (3);

- the control module comprising:

■ at least two illumination sensors matched to the scanning of the screen by the luminous spot:

■ a first illumination sensor (D1) having a detection field comprising at least the upper left-hand part of the screen (3);
■ a second illumination sensor (D2) having a detection field limited to a reduced zone (Z) of the screen (3);
■ a broadband amplifier and a high-pass filter for each of the illumination sensors;
■ means to detect the appearance of the luminous spot in the detection field of each of the sensors to produce a signal with a predetermined logic level;

- means for logical and arithmetic processing of logic signals to calculate the position of the zone (Z) being aimed at on the screen based on at least, firstly, the moment of appearance of the logic signal corresponding to the first illumination sensor (D1) whose detection field comprises at least the upper left-hand part of the screen and which corresponds to the start of the scanning of the image and, secondly, based on the moment of appearance of the logic signal corresponding to the second illumination sensor (D2) whose detection field is reduced and which corresponds to the passage of the luminous spot in front of the zone (Z) being aimed at; and

- a transmission chain from the module (1) to the electronic device (2), the device comprising a logic circuit that is able to be modified by information received.

2. Interface system according to Claim 1, in which the means for logical and arithmetic processing of logic signals calculates the position of the zone Z being aimed at on the screen based on the time difference existing between firstly the moment of appearance of the logic signal corresponding to the first illumination sensor (D1) whose detection field comprises at least the upper left-hand part of the screen and which corresponds to the start of the scanning of the image, and secondly the moment of appearance of the logic signal corresponding to the second illumination sensor (D2) whose detection field is reduced and which corresponds to the passage of the luminous spot in front of the zone (Z) being aimed at.

3. Interface system according to Claim 1, in which the detection field of the first sensor (D1) contains the whole of the screen (3) and the means for logical and arithmetic processing of logic signals calculate the position of the zone (Z) being aimed at on the screen based on, in addition, the moment of appearance of the logic signal corresponding to the first illumination sensor (D1) on a line that corresponds also to the passage of the luminous spot in front of the zone (Z) being aimed at.

4. Interface system according to Claim 3, in which the means for logical and arithmetic processing are also capable of:

- memorising the moments of appearance of logic signals corresponding to the first illumination sensor (D1) for several lines corresponding to the start of the scanning of the screen,
- memorising, for several lines of scanning, the moments of signals corresponding to the illumination of the said sensors (D1, D2) by the passage of the luminous spot on the same line.

5. Interface system according to any one of the foregoing Claims, in which the first illumination sensor (D1) and the second illumination sensor (D2) have axes that are parallel and close together.

6. Interface system according to any one of the foregoing Claims, in which the first illumination sensor (D1), whose detection field comprises at least the upper left-hand part of the screen (3), comprises an illumination detector (45) and a focussing device (47) to improve the sensitivity of the sensor.

7. Interface system according to Claim 6, in which the focussing device is chosen from among a conical mirror and a system of optical lenses.

8. Interface system according to any one of the foregoing Claims, in which the second illumination sensor (D2), whose detection field is reduced, comprises an illumination detector (50) and a focussing system (53) to focus the light originating from the zone (Z) being aimed at onto the active surface area of the detector (50).

9. Interface system according to any one of the foregoing Claims, in which the screen (3) comprises, in the upper left-hand part, a reduced portion (58) of surface area whose colour is light.

10. Interface system according to any one of the foregoing Claims, in which the electronic device (2) also comprises means for screen control to display on the screen a graphic effect (40) in a position related to the zone (Z) being aimed at.

11. Interface system according to Claim 10, in which the control module (1) comprises means that are selectively actuatable by the user, the result of this action being transmitted to the electronic device (2) by the module (1).

12. Interface system according to Claim 11, in which the selectively actuatable means of control are chosen from among keys, potentiometers, pressure sensors, angle sensors, position sensors, gyroscopes, at least one voice control and at least one joystick.

13. Interface system according to any one of the Claims 10 to 12, in which the control module (1) transmits information to the electronic device (2) when the position of the zone (Z) being aimed at has changed by a minimum pre-determined value.

14. Interface system according to any one of the Claims 10 to 13, in which the control module (1) also comprises means of identification designed to enable the electronic device (2) to recognise the control module, these means of identification generating selectively data identifying the module (1) and sent to the electronic device (2).

15. Interface system according to Claim 14, in which several control modules (1) communicate with the electronic device (2) and the means of control of the device of each control module transmit their information a certain number of times to the electronic device (2) to increase the probability of the electronic device receiving the information transmitted by each module without interference with the information transmitted by the other modules.

16. Interface system according to Claim 13, in which several control modules (1) communicate with the electronic device (2) and the means of control of the device of each control module transmit their information to the electronic device (2) in synchronism relative to the start of the image displayed on the screen (3) and at moments in time defined by intervals specific to each module relative to the start of the image.

17. Interface system according to one or other of the Claims 15 and 16, in which the electronic device (2) comprises means that initiate the transmission of new information by at least one of the said control modules (1).

18. Interface system according to Claim 17, in which the means initiating the transmission of new information consist of at least one part of the screen (3) displaying a predetermined sequence of luminous intensities.

19. Interface system according to any one of the foregoing Claims, in which the transmitter and the receiver communicate via waves.

20. Interface system according to any one of the foregoing Claims, in which the transmitter and the receiver are linked by a transmission cable.

21. Interface system according to any one of the foregoing Claims, in which the control module comprises means for periodic measuring and periodic memorisation of the time of illumination of the second sensor (D2) by the luminous spot to enable detection of the control module moving closer to or moving away from the screen by measuring the variation in the illumination time of the sensor by the said luminous spot.

22. Interface system according to any one of the foregoing Claims, in which the control module comprises, firstly, two illumination sensors (D2, D3) with axes parallel and close together, having detection fields each limited to a reduced zone (z, z') of the screen and, secondly, means for supplementary logical and arithmetic processing to measure the position of the two distinct zones (z, z') on the screen and enabling the calculation of the angle of rotation of the control module relative to the common axis of the said illumination sensors (D2, D3).

FIG.1.

FIG. 2.

FIG. 3.

FIG. 4.

52 →
53

54

50

FIG.5.

FIG.6.

T1

3

T3

T2

Z

FIG.7.

FIG.8.